# EUROPÄISCHE PATENTSCHRIFT

(11) **EP 2 933 355 B1**
(45) Veröffentlichungstag und Bekanntmachung des Hinweises auf die Patenterteilung: **03.07.2019**
(21) Anmeldenummer: 14164957.4
(22) Anmeldetag: 16.04.2014
(51) Int. Cl.: C23F 13/06, C23F 13/14, B05D 7/16, B05D 7/00, B05D 5/00, C09D 5/10, C09D 5/08, C09D 1/00, C09D 7/61, C08K 3/04, C08K 3/08, C08K 3/22

(54) **Verfahren zum Herstellen einer dunklen Korrosionsschutzbeschichtung**
Method for producing a dark anti-corrosion coating
Procédé de fabrication d'un revêtement de protection anticorrosion foncé

(43) Veröffentlichungstag der Anmeldung: 21.10.2015
(73) Patentinhaber: Ewald Dörken AG, 58313 Herdecke (DE)
(72) Erfinder: Grossmann, Verena, 58313 Herdecke (DE); Johanterwage, Nina Maria Dr., 48336 Sassenberg (DE); Jose Simoes, Nadine, 58285 Gevelsberg (DE); Matthée, Nicole, 58313 Herdecke (DE); Mertens, Heike, 58097 Hagen (DE); Owczarek, Kai, 58313 Herdecke (DE); Reusmann, Gerhard Dr., 45259 Essen (DE); Roth, Marcel Dr., 40589 Düsseldorf (DE)
(74) Vertreter: Von Rohr Patentanwälte Partnerschaft mbB

(56) Entgegenhaltungen:
- EP-A1- 2 662 210
- WO-A1-2010/043708
- WO-A2-2005/090502

## Beschreibung

Die Erfindung betrifft ein Verfahren zum Herstellen einer dunklen Korrosionsschutzbeschichtung auf einem metallischen Substrat und eine zur Verwendung in dem erfindungsgemäßen Verfahren geeignete flüssige Topcoat-Zusammensetzung.

Beschichtungen, die metallische Substrate gegen Korrosion schützen, sind bekannt. Typische Beschichtungen weisen einen auf das Substrat aufgetragenen Basecoat auf, der ein Bindemittel und antikorrosiv wirkende Metallpartikel aufweist. Dieser Basecoat ist meist überzogen mit einem Topcoat, der ein Bindemittel und ggf. ein oder mehr Additive zum Einstellen von Eigenschaften der fertigen Korrosionsschutzbeschichtung oder von Verarbeitungseigenschaften der flüssigen Zusammensetzung aufweist. Solche Beschichtungen sind z. B. offenbart in der US 2004/0206266 A1 oder der DE 102 04 829.

Zum Erzeugen dunkler oder schwarzer antikorrosiver Oberflächen werden der flüssigen Basecoat-Zusammensetzung, vorzugsweise aber der flüssigen Topcoat-Zusammensetzung färbende Additive zugesetzt. Färbende Additive ergeben bei Verwendung mit anorganischen oder organischen Bindemitteln nach dem Aushärten der flüssig aufgetragenen Beschichtungszusammensetzung gleichmäßig dunkel gefärbte Oberflächen. Ein Färben des Basecoats bringt den Nachteil mit sich, dass die färbenden Additive, insbesondere Farbpigmente, den kathodischen Korrosionsschutz reduzieren können. Daher werden meist Topcoats dunkel gefärbt, denn hier ist der Einsatz von färbenden Additiven eher vertretbar und die färbende Wirkung der Additive ist wesentlich besser, zumal die färbende Wirkung der Additive sich unabhängig von der darunter liegenden Schicht des Basecoats entfalten kann und die dort enthaltenen Metallpartikel nicht in ihrer kathodischen Korrosionsschutzwirkung beeinflusst.

Antikorrosive Beschichtungen, die z. B. auf Gewindeteile aufzubringen sind, sollen für die bessere industrielle Verarbeitbarkeit definierte Reibeigenschaften aufweisen. Diese Reibeigenschaften werden z. B. gemäß VDA 235-101 als Reibzahlbereich oder Reibzahlfenster angegeben. Weiter wird gefordert, dass sich die Reibzahl gemäß VDA 235-203 auch unter Wärmeeinfluss stabil verhält. Eine Schraube, die mit einem Gewinde im Eingriff steht, soll auch nach längerer Wärmebehandlung fest verschraubt bleiben.

Hier weisen solche dunklen oder schwarzen Topcoats mit einem organischen Bindemittel und färbenden Additiven den Nachteil auf, dass zwar durch Zugabe von Gleit- oder Schmiermitteln ein vorgegebenes Reibzahlfenster eingestellt werden kann. Allerdings ist es bisher nicht möglich, dunkle Topcoats mit anorganischen oder mit organischen Bindemitteln mit guten Warmlöseeigenschaften herzustellen, da beim Prüfen des Warmlöseverhaltens die Reibzahl signifikant abfällt.

Die WO 2005/090502 A1 betrifft ein Bindemittel, aufweisend ein wässriges, filmbildendes polymeres Siloxan, sowie unter Verwendung dieses Bindemittels hergestellte Beschichtungsmittel und mit den Beschichtungsmitteln beschichtete Werkstücke.

Weiterhin betrifft die EP 2 662 210 A1 eine wässrige Korrosionsschutzbeschichtungszusammensetzung, welche 5 bis 25 Gewichts-% eines Silankupplungsreagenzes und 30 bis 60 Gewichts-% einer Alkalisilikatverbindung, jeweils bezogen auf die Zusammensetzung, enthält.

Schließlich betrifft die WO 2010/043708 A1 ein Verfahren zum elektrochemischen Korrosionsschutz einer metallischen Oberfläche eines Werkstücks durch Aufbringen und Aushärten einer ein- oder mehrschichtigen Beschichtung mit einer dem Werkstück zugewandten Grenzfläche und mit einer dem Werkstück abgewandten Grenzfläche, wobei ein oder mehrere Basecoats, jeweils aufweisend mindestens ein Bindemittel und metallische Partikel, schichtweise aufgebracht werden. Um Maßnahmen zum effizienten Einsatz von Metallpartikeln zum Korrosionsschutz in bindemittelhaltigen Beschichtungen vorzuschlagen, ist vorgesehen, dass der elektrochemische Korrosionsschutz bereitgestellt wird durch eine Beschichtung mit einer Metallpartikelkonzentration und/oder einer Metallpartikelzusammensetzung, die sich an der dem Werkstück zugewandten Grenzfläche von der an dem Werkstück abgewandten Grenzfläche unterscheidet.

Es ist daher Aufgabe der Erfindung, ein Verfahren vorzuschlagen, mit der ein metallisches Substrat mit einer dunklen Korrosionsschutzbeschichtung, aufweisend einen dunklen Topcoat mit einem Bindemittel, einem färbenden Additiv und einem Schmiermittel versehen werden kann, wobei die dunkle Korrosionsschutzbeschichtung ein Einhalten der Vorgaben zum Warmlösen von Schrauben gemäß VDA 235-203 ermöglicht.

Diese Aufgabe wird mit dem erfindungsgemäßen Verfahren nach Anspruch 1 und einem Topcoat nach Anspruch 17 gelöst.

Eine flüssige Basecoat-Zusammensetzung ist im Zusammenhang mit dieser Erfindung eine Beschichtungszusammensetzung, die ein Bindemittel und Metallpartikel enthält, wobei die Metallpartikel zum aktiven Korrosionsschutz beitragen. Die flüssige Basecoat-Zusammensetzung wird auf das metallische Werkstück aufgetragen und dort zu einem Basecoat ausgehärtet, der das Werkstück als antikorrosiv wirkende Schicht überzieht.

Die in der Basecoat-Zusammensetzung verwendeten Metallpartikel sind Metallpartikel aus Zinklegierungen, z. B. Zink-Aluminiumlegierungen oder Zink-Manganlegierungen.

Zink -Aluminium-Magnesium Legierungspartikel (ZnAlMg-Legierungspartikel) sind besonders bevorzugt, insbesondere, wenn es um die Erzeugung dunkler Oberflächen oder um Oberflächen mit hoher Beständigkeit gegen Weißrost geht. Für solche ZnAlMg-Legierungspartikel beträgt bevorzugt der Anteil von Magnesium und Aluminium jeweils bis zu 25 Gewichts-% bezogen auf das Gewicht der Legierung insgesamt. Der Rest besteht vorteilhaft aus Zink, ggf. mit Verunreinigungen. Eine typische ZnAlMg-Legierung weist jeweils 6% Aluminium und Magnesium auf, der Rest besteht aus Zink.

Vorteilhaft weisen die Metallpartikel die Form von Lamellen auf; es ist aber auch möglich, Metallpulver einzusetzen. Die kathodisch wirksamen Metallpartikel werden meist in einer Größe von 500 nm bis 50 µm eingesetzt, häufig in einer Größe von bis zu 30 µm, jeweils gemessen für 50 % der eingesetzten Partikel. Die antikorrosive Wirkung entsteht durch den Verbund der Metallpartikel untereinander in der Beschichtung und durch die bevorzugte Reaktion zwischen den Metallpartikeln und der korrosiven Umgebung. Durch die Reaktion zwischen dem Sauerstoff der korrosiven Umgebung und den kathodisch aktiven Metallpartikeln, die als Opferanode wirken, wird das metallische Substrat, also das metallische Werkstück, das mit der antikorrosiven Beschichtungszusammensetzung beschichtet ist, vor Korrosion geschützt. Dabei erweisen sich lamellenförmige Metallpartikel als besonders wirksame Barriere gegen Korrosion, da sie schuppenförmig dicht übereinander liegen und damit große Kontaktflächen aufweisen.

Die Metallpartikel können einen Anteil von 10 Gewichts-% bis zu 70 Gewichts-% an der fertigen Beschichtungszusammensetzung aufweisen. Die Untergrenze bestimmt sich durch das Unterschreiten der notwendigen antikorrosiven Wirkung, die Obergrenze ergibt sich aus Kostenüberlegungen und der Eignung des Bindemittels, hohe Mengen an Metallpartikel wirksam und vollständig zu einem Beschichtungsfilm auf dem metallischen Substrat zu binden. Bevorzugt weist der Basecoat mindestens 40 Gewichts-% Metallpartikel in der fertigen Beschichtungszusammensetzung auf.

Als Bindemittel werden für den Basecoat bzw. die flüssige Basecoat-Zusammensetzung bevorzugt anorganische Bindemittel eingesetzt. Bevorzugte Bindemittel sind Silane, Silanole, Silikate, Siloxane sowie titan- und/oder zirkoniumbasierte Bindemittel, typisch eingesetzt als Titanate oder Zirkonate oder Mischungen dieser Bindemittel. Als Silane werden bevorzugt Epoxy- und Aminosilane, einzeln oder in Mischung, eingesetzt. Tri- und Dialkoxymonosilane erweisen sich als gut geeignete Bindemittel bzw. Bindemittel-Komponenten, insbesondere solche, die Methanol oder Ethanol abspalten. Unter Verwendung dieser Bindemittel können Beschichtungszusammensetzungen, die kathodisch wirksame Metallpartikel enthalten, mit guten antikorrosiven Eigenschaften hergestellt werden. Vorteilhaft können auch organische Bindemittel wie Acrylate, Methacrylate, Polyurethane, stickstoffbasierte Bindemittel wie Harnstoff-Formaldehydharz oder Melamin, epoxidbasierte Bindemittel wie z. B. Polyepoxide, Polyether, Polyester oder deren Mischungen als Co-Bindemittel zusammen mit den vorgenannten anorganischen Bindemitteln eingesetzt werden. Organische Bindemittel können auch als alleiniges Bindemittel eingesetzt werden.

Die flüssige Basecoat-Zusammensetzung kann nach einer besonders bevorzugten Ausführung der Erfindung auch Schmiermittel aufweisen, insbesondere die im Folgenden für die Verwendung im Topcoat genannten Schmiermittel, allerdings in deutlich geringeren Mengen als dort genannt.

Werkstücke, insbesondere Gewindeteile, die mit Basecoats ohne Zusatz von Schmiermittel sowie mit einem Topcoat beschichtet sind, weisen am Gewinde eine höhere Reibzahl -und damit schlechtere Gleiteigenschaften- auf als an ebenen, beschichteten Flächen wie z. B. dem Kopf einer Schraube, der auf einer Mutter oder Gewindescheibe aufliegt. Dies ist darauf zurückzuführen, dass die Kanten des Gewindes oft nicht vollständig mit Basecoat beschichtet sind (z. B. Kantenflucht), so dass an diesen Stellen schlechtere Gleiteigenschaften vorliegen. Da die Reibzahl-Messungen für beide Bereiche (Gewinde und ebene Flächen) in die Reibzahlermittlung eingehen, weist ein Werkstück, das mit einem Basecoat ohne Schmiermittel beschichtet ist, wegen der höheren Reibzahl an den Gewindekanten eine unerwünscht hohe Reibzahl auf.

Wird ein Basecoat mit Schmiermittel aufgebracht, trägt selbst bei geringer Benetzung der Gewindekanten das Schmiermittel dazu bei, dass geringere Reibzahlen am Gewinde gemessen werden, so dass bei der Gesamt-Reibzahlermittlung der ebenen Flächen und der Gewinde insgesamt bei ansonsten gleicher Beschichtung des Werkstücks eine deutlich geringere Reibzahl gemessen werden kann. Es wird daher zum Erreichen einer insgesamt niedrigen Reibzahl bevorzugt, wenn in einer antikorrosiven Oberflächenbeschichtung, die einen Basecoat und einen Topcoat aufweist, der Basecoat mit einem Schmiermittel versehen ist.

Erfindungsgemäß ist das mit einem Basecoat beschichtete Werkstück mit einem Topcoat versehen. Der Topcoat wird als flüssige Topcoat-Zusammensetzung auf den Basecoat aufgetragen. Der Topcoat wird hergestellt aus einer flüssigen Topcoat-Zusammensetzung, die im Wesentlichen ein organisches Bindemittel oder ein Gemisch von organischen Bindemitteln aufweist, und die vorliegend erfindungsgemäß durch dunkel färbende Additive sowie ein Schmiermittel ergänzt ist. Erfindungsgemäß weist der Topcoat ein organisches und ein anorganisches Bindemittel auf.

Bekannte Topcoats, die dunkel färbende Additive aufweisen, sind unter Verwendung eines organischen Bindemittels hergestellt, weil die dunkel färbenden Additive sich darin gleichmäßig verteilen und sich deren dunkel färbende Wirkung am besten auf dem Werkstück entfaltet. Topcoat-Zusammensetzungen mit dunkel färbenden Additiven enthalten in dem organischen Bindemittel auch Schmiermittel, um bestimmte Reibzahl-Fenster oder Reibzahl-Werte einzustellen. Allerdings erweichen die organischen Bindemittel beim Erwärmen eines beschichteten Gewindeteils auf 150 °C bereits stark, so dass sich die Reibzahl - und damit die Gleiteigenschaften des beschichteten Werkstücks zu stark verändern. Das Risiko steigt stark an, dass sich Gewindeteile, die mit solchen Topcoats, aufweisend organisches Bindemittel und Schmiermittel, beschichtet sind, nach dem Verschrauben unter Wärmeeinfluss voneinander lösen.

Es ist die Erkenntnis der Erfinder, dass dieser Nachteil der Verwendung organischer Bindemittel in dunkel gefärbten Topcoat-Zusammensetzungen mit Schmiermitteln wesentlich reduziert werden kann, wenn dem organischen Bindemittel ein anorganisches Bindemittel beigemischt wird. Organische und anorganische Bindemittel werden erfindungsgemäß gemeinsam und in Mischung verwendet werden. Das anorganische Bindemittel weist bei Erwärmung kaum veränderte Gleiteigenschaften bzw. Reibzahlen auf. Erfindungsgemäß bewirkt schon ein geringer Anteil an anorganischem Bindemittel in der erfindungsgemäßen Topcoat-Zusammensetzung in dem ausgehärteten Topcoat eine deutliche Stabilisierung der Reibzahl gegenüber einem ansonsten gleichen Topcoat mit rein organischem Bindemittel. Gleichzeitig wird die qualitativ gute dunkle Färbung des Topcoats und die gute Filmbildung, die durch ein rein organisches Bindemittel gewährleistet ist, durch den Zusatz eines anorganischen Bindemittels kaum beeinträchtigt. Die Wirkung des Schmiermittels ist weitgehend unabhängig von der Art bzw. der Kombination der verwendeten Schmiermittel.

Der Anteil des organischen Bindemittels in der Topcoat-Zusammensetzung beträgt erfindungsgemäß mehr als 40 Gewichts-% (bezogen auf das organische und anorganische Bindemittel insgesamt), bevorzugt mehr als 50 Gewichts-%, besonders bevorzugt mehr als 60 Gewichts-% bezogen auf das Bindemittel insgesamt. Der Anteil des organischen Bindemittels beträgt im Rahmen der vorliegenden Erfindung bis zu 90 Gewichts-%. Für den Zusatz anorganischer Bindemittel ergeben sich die komplementären Anteile zu den vorgenannten Mengen organischer Bindemittel. Ein Anteil von mindestens 10 Gewichts-% anorganischem Bindemittel bezogen auf den Einsatz von organischem und anorganischem Bindemittel insgesamt ist demnach empfehlenswert, um eine signifikante Änderung der Reibzahl-Entwicklung unter Einfluss von Wärme, also eine Änderung des Warmlöseverhaltens zu bewirken. Bevorzugt beträgt der Anteil des anorganischen Bindemittels nicht über 60 Gewichts-%, weil ansonsten eine Beeinträchtigung der gleichmäßig dunklen Färbung des Topcoats gegeben sein kann.

Die Verschraubung durch Roboter erfordert das strikte Einhalten genau definierter Reibzahlfenster, da der Roboter sonst im Produktionsprozess nicht störungsfrei und zuverlässig verschrauben kann. Bei der Überprüfung der Eigenschaften einer Beschichtung aus einem beliebigen Basecoat und dem hier beschriebenen Topcoat auf einem metallischen Substrat oder Werkstück hat sich herausgestellt, dass das Warmlöse-Verhalten des Werkstücks deutlich verbessert ist. Das Warmlösen eines Werkstücks beschreibt gemäß VDA 235-203 das Verhalten eines Gewindeelements, das in einer Verschraubung über längere Zeit bei Temperaturen von mindestens 150 °C fixiert ist und das anschließend aus der Verschraubung gelöst wird in Relation zur Verschraubung im kalten Zustand. Gemessen wird jeweils die Reibzahl in kaltem Zustand (bei Raumtemperatur) und bei 150 °C; angestrebt ist, dass die Reibzahl möglichst unverändert bleibt. Typische Grenzwerte für das vorstehend erwähnte Reibzahlfenster für die Verarbeitung der Schrauben mittels Roboter sind z. B. eine Obergrenze bei einer Reibzahl von 0,14. Als Untergrenze für den Reibzahlabfall beim Warmlösen wird häufig eine Reibzahl von 0,06 genannt, weil Fachleute ein Risiko sehen, dass sich Gewindeteile, deren Oberflächen eine geringere Reibzahl aufweisen, von selbst voneinander lösen könnten. Aufgetragen auf einen Basecoat bewirkt die Verwendung des erfindungsgemäßen Topcoats, der anorganisches Bindemittel enthält, gegenüber einem ansonsten gleichen Topcoat, der jedoch kein anorganisches Bindemittel enthält, eine Stabilisierung der Reibzahl nach dem Erwärmen um mehr als 10 %. Das gewünschte Reibzahlfenster für die automatische Verschraubung kann also besser eingehalten werden.

Die Kombination eines organischen und eines anorganischen Bindemittels in einer flüssigen Topcoat-Zusammensetzung hat darüber hinaus aber noch weitere Vorteile: Rein organische Bindemittel in Topcoats bewirken bei hoher Bindemittelkonzentration häufig, dass beschichtete Werkstücke bis zum Aushärten aneinander kleben, so dass das Trennen der Werkstücke die Beschichtung beschädigt. Häufig ist dies bei polymeren Bindemitteln der Fall, die in hoher Bindemittel-Konzentration im Nassfilm auf dem Werkstück abgeschieden werden. Typisch können hier wässrige Acrylat-Bindemittel genannt werden. Rein anorganische Bindemittel wie z. B. silikatbasierte Bindemittel, die zwar gute Hafteigenschaften aufweisen, sind dagegen häufig nicht lösungsmittelbeständig und spröde; sie splittern schnell vom Werkstück ab, wenn beschichtete Werkstücke z. B. geschüttet oder geworfen werden. Diese Sprödigkeit hat aber wiederum den Vorteil, dass die Werkstücke untereinander oder gegeneinander bewegliche Teile von Werkstücken (z. B. Schraube mit unverlierbarer Unterlegscheibe) nicht verkleben. Die erfindungsgemäße Kombination aus organischen und anorganischen Bindemitteln in einer flüssigen Topcoat-Zusammensetzung gewährleistet einerseits als ausgehärteter Topcoat auf einem Basecoat eine antikorrosive Beschichtung, die neben dem geforderten guten Warmlöseverhalten die gewünschte dunkle Färbung aufweist. Zusätzlich wird durch die anorganische Komponente gewährleistet, dass z. B. beim Beschichten von Massenkleinteilen die beschichteten Werkstücke nicht aneinander kleben. Darüber hinaus ist die antikorrosive Beschichtung unter Verwendung des erfindungsgemäßen Topcoats nicht spröde.

Besonders hervorzuheben ist, dass ein erfindungsgemäß zum Erzeugen einer vorgegebenen Reibzahl eingestellter dunkler Topcoat in Verbindung mit einem Basecoat, der ein Schmiermittel aufweist, sehr gute Warmlöseeigenschaften aufweist, weil durch die Verwendung eines Schmiermittels im Basecoat die Reibeigenschaften der antikorrosiven Beschichtung auf dem Werkstück, wie vorstehend beschrieben, besser einstellbar sind, sowohl insgesamt, aber vor allem auch betreffend vergleichmäßigter Reibeigenschaften am Gewinde und an ebenen Flächen durch den Basecoat.

Als Bindemittel des Topcoats werden bevorzugt folgende organische Bindemittel eingesetzt: Acrylat- oder Methacrylatverbindungen, z. B. Styrolacrylat, Polyurethan-, Polyester- und Polyetherverbindungen aber auch expoxybasierte oder stickstoffbasierte Kunstharze, jeweils einzeln oder in Mischung miteinander. Eingesetzt werden jeweils reaktive Bindemittel. Besonders bevorzugt wird es, wenn im Rahmen der erfindungsgemäßen Zusammensetzung des Bindemittels des Topcoats ein stickstoffbasiertes Kunstharz wie Melamin, z. B. methyliertes Melamin-Formaldehydharz oder ein Harnstoff-Formaldehydharz als eine von mehreren Komponenten des organischen Bindemittels eingesetzt wird.

Stickstoffbasierte Kunstharze können gut in Kombination mit anderen organischen und anorganischen Bindemitteln für eine erfindungsgemäße Beschichtung eingesetzt werden. Bevorzugt beträgt der Einsatz des stickstoffbasierten Kunstharzes maximal 50 Gewichts-% des organischen Bindemittels, besonders bevorzugt bis zu 30 Gewichts-% des Anteils des organischen Bindemittels. Vorteilhaft ist der Einsatz von mindestens 10 Gewichts-% eines stickstoffbasierten Kunstharzes bezogen auf den Anteil des organischen Bindemittels. Durch den Zusatz von z. B. Melamin zu dem Bindemittelgemisch der flüssigen Topcoat-Zusammensetzung wird eine besonders weitgehende oder vollständige Vernetzung des Bindemittels insgesamt erreicht. Andere Substanzen, die eine gute Vernetzung des Bindemittels bewirken bzw. unterstützen sind z. B. Polyisocyanat oder Acrylmonomere.

Besonders bevorzugt wird für den Topcoat eine Mischung überwiegend organischer Bindemittel mit einer Beimischung anorganischer Bindemittel. Vorgeschlagen werden insbesondere ein Topcoat und eine Topcoat-Zusammensetzung mit einem anorganischen Bindemittel wie z. B. einem Silikat, Silan, Silanol oder Siloxan oder mit einer Titanat- oder Zirkonatverbindung oder mit einer Mischung dieser anorganischen Bindemittel. Sämtliche vorstehend im Zusammenhang mit der Herstellung von Basecoats genannten anorganischen Bindemittel sind auch als Bindemittel für die erfindungsgemäßen Topcoats geeignet. Als gut geeignet haben sich silikatische Bindemittel erwiesen, beispielsweise mit Natrium-, Kalium-, Lithium- oder Ammoniumsilikat oder kolloidalem Silikat. Bevorzugt ist hier den Einsatz von Polysilikaten. Vermutlich ist die gute Wärmestabilität des silikatischen Netzwerks die Ursache für die guten Warmlöseigenschaften des erfindungsgemäßen Topcoats.

Besonders bevorzugt wird der Einsatz von Silikat und/oder Silan, deren Mischungen oder Modifikationen, z. B. alkylmodifizierte Silikate als anorganisches Bindemittel für den erfindungsgemäßen Topcoat bzw. die flüssige Topcoat-Zusammensetzung. Silane bzw. Siloxane einerseits und Silikate andererseits können in einem weiten Mischungsverhältnis zueinander eingesetzt werden. Bevorzugt ist jedoch für die anorganischen Bindemittel ein Einsatz von Silan bzw. Siloxan von 40 Gewichts-% bis 70 Gewichts-%, korrespondierend mit einem Einsatz von Silikaten von 30 Gewichts-% bis 60 Gewichts-%, jeweils bezogen auf den Einsatz der anorganischen Bindemittel.

Insbesondere bei Versuchen mit Silikat als anorganischen Bindemittel hat sich herausgestellt, dass die antikorrosive Wirkung besonders hoch ist, wenn der erfindungsgemäße Topcoat mit einem pH-Wert größer 7, bevorzugt größer pH 9, vorteilhaft mit einem pH-Wert größer 10 auf den Basecoat aufgetragen wird. Die verbesserte Wirkung des alkalischen pH-Werts ist jedoch unabhängig vom Bindemittel. Sie zeigt sich sowohl dann, wenn bereits die Art der Bindemittel ohne weiteres zur Einstellung eines alkalischen pH-Werts führt, sie zeigt sich aber auch, wenn ein alkalischer pH-Wert durch Zugabe von Base eingestellt wird.

Im Rahmen der Durchführung des erfindungsgemäßen Verfahrens sind sowohl Topcoat-Zusammensetzungen geeignet, die unter den organischen und anorganischen Bindemitteln vernetzende Bindemittel aufweisen, die beim Aushärten durch Polymerisierung zur Bildung von Netzwerken beitragen. Vernetzende Bindemittel werden auch als reaktive Bindemittel bezeichnet. Aber auch nicht-vernetzende Bindemittel sind als Komponente des Bindemittels in einer erfindungsgemäßen Topcoat-Zusammensetzung geeignet. Es sind auch Mischungen von vernetzenden mit nicht-vernetzenden Bindemitteln möglich, dabei kann es sich sowohl um organische als auch um anorganische Bindemittel handeln. Weiter können sowohl unterschiedliche organische und anorganische vernetzende Bindemittelkombinationen eingesetzt werden, die miteinander vernetzen und sogenannte interpenetrierende Netzwerke ausbilden. Es können aber in der erfindungsgemäßen Topcoat-Zusammensetzung auch unterschiedliche vernetzende organische und anorganische Bindemittel Verwendung finden, die ausschließlich in ihrem eigenen Netzwerk vernetzen und separat als eigene Bindemittelphase im Gesamtbindemittelsystem vorliegen. Dies ermöglicht individuelle Bindemittel-Zusammensetzungen aus organischer und anorganischer Komponenten.

Bezogen auf die Gesamt-Zusammensetzung der flüssigen Topcoat-Zusammensetzung werden die anorganischen und organischen Komponenten des Bindemittels insgesamt in einer Menge von bis zu 30 Gewichts-% bezogen auf die Gesamt-Zusammensetzung der weiteren Beschichtung (des Topcoats) eingesetzt. Bevorzugt werden von diesem Bindemittel bzw. dieser Mischung von Bindemitteln bis zu 25 Gewichts-% in der Gesamt-Zusammensetzung der flüssigen Topcoat-Zusammensetzung eingesetzt, besonders bevorzugt bis zu 20 Gewichts-%. Der Mindest-Einsatz an Bindemittel beträgt 5 Gewichts-%. Soweit dieser Beschreibung die Angabe Gewichts-% verwendet wird, bezieht sich diese Angabe auf die Gesamt-Zusammensetzung der Topcoat-Zusammensetzung, soweit nichts anderes angegeben wird.

Der ausgehärtete Topcoat ist in einer Schichtstärke von bis zu 20 µm aufgetragen, vorzugsweise in einer Schichtstärke von 6 µm bis 10 µm. Diese Angaben beziehen sich auf die Trockenfilmstärke, also die Stärke nach dem Trocknen oder Aushärten des Topcoats.

Der Topcoat enthält erfindungsgemäß dunkel färbende Additive. Farbstoffe oder färbende Pigmente bzw. Metalloxide als Additive unterstützen die Ausbildung einer dunklen Oberfläche auf dem Werkstück. Diese dunkel färbenden Additive werden der flüssigen Topcoat-Zusammensetzung zugegeben. Sie verteilen sich besonders gleichmäßig im organischen Bindemittel der flüssigen Topcoat-Zusammensetzung. Bevorzugt wird zum Erzeugen einer dunklen Färbung der antikorrosiven Beschichtung auf dem Werkstück Ruß eingesetzt, aber auch Graphit oder Fullerene können eingesetzt werden. Weiter ist auch der Einsatz von üblichen Pigmenten oder Farbstoffen möglich, bevorzugt der Einsatz von Metallpigmenten wie zum Beispiel Aluminiumpigmenten oder von Metalloxiden wie z. B. Spinellen, die dem Topcoat und der daraus hergestellten Beschichtung eine dunkle Farbe verleihen. Besonders bevorzugt ist der Einsatz einer Kombination von dunkel färbenden Additiven, z. B. von Ruß und Metallpigmenten oder von Ruß und Spinellen.

Additive, die eine dunkle Färbung der Beschichtung auf dem Werkstück gewährleisten, werden in der hier beschriebenen flüssigen Topcoat-Zusammensetzung, bezogen auf die Gesamt-Zusammensetzung in einer Menge von bis zu 10 Gewichts-%, bevorzugt in einer Menge von bis zu fünf Gewichts-% eingesetzt. Im Trockenfilm können bis zu 20 Gewichts-%, bevorzugt bis zu 15 Gewichts-% dunkel färbende Additive bestimmt werden. Die Untergrenze der einzusetzenden Menge ergibt sich daraus, dass eine ausreichend dunkle Färbung der herzustellenden antikorrosiven Beschichtung erforderlich ist. Diese Additive, die im Zusammenhang mit dieser Erfindung eine dunkle Färbung des Topcoats und damit auch des beschichteten Werkstücks gewährleisten, weisen keine antikorrosive Wirkung auf und unterscheiden sich damit wesentlich von den Metallpartikeln des Basecoats.

Im Sinne dieser Erfindung meint eine dunkle Färbung des Topcoats eine Färbung, die auf dem metallischen Substrat, das mit einem Basecoat beschichtet ist, eine Beschichtung erzeugt, die im Lab-Farbraum, auch als CIELAB-Farbraum bezeichnet, einen Wert von maximal 40, bevorzugt von maximal 30 aufweist. Die Messung des L*a*b-Farbraums wird gemessen gemäß EN ISO 11664-4. Im Zusammenhang mit der vorliegenden Erfindung ist besonders der Parameter "L" von Bedeutung, mit dem die Helligkeit (ein Wert zwischen 0 = Schwarz und 100 = Weiß) ausgedrückt wird. Bevorzugt ist die dunkle Beschichtung eine dunkelgraue oder schwarze Beschichtung.

Bei Untersuchungen an Werkstücken, die nach dem erfindungsgemäßen Verfahren beschichtet wurden, wurde festgestellt, dass der Zusatz von Additiven, die eine dunkle Färbung des Topcoats und entsprechend des beschichteten Werkstücks bewirken, keine nachteiligen Wirkungen auf die ggf. vorhandenen Füllstoffe oder Schmier- bzw. Gleitmittel haben. Diese Additive können in freier Kombination zueinander und mit den Bindemitteln eingesetzt werden.

Die flüssige Topcoat-Zusammensetzung, mit der das erfindungsgemäß beschichtete Werkstück überzogen wird, weist erfindungsgemäß Schmiermittel zur Einstellung der Reibzahl auf. Besonders bevorzugt sind hier natürliches oder synthetisches Wachs, Fett oder Öl, einzeln oder in Mischung. Typisch werden hier beispielsweise Polyethylenverbindungen eingesetzt, aber auch Verbindungen wie Polypropylen, Graphit, Polytetrafluorethylen (PTFE) oder Molybdändisulfid werden eingesetzt. Kombinationen verschiedener Schmiermittel können verwendet werden. Schmiermittel zur Einstellung der Reibzahl werden in der hier beschriebenen Topcoat-Zusammensetzung in einer Menge von bis zu 10 Gewichts-%, bevorzugt in einer Menge von bis zu 5 Gewichts-% eingesetzt. Die Untergrenze des Einsatzes der Schmiermittel ergibt sich daraus, dass zu geringe Mengen an Schmiermittel nicht die gewünschte Wirkung entfalten. Diese Schmiermittel, auch als Gleitmittel bezeichnet, können in flüssiger Form und als Feststoff eingesetzt werden. Sie können einzeln oder in Mischung eingesetzt werden. Sie unterstützen das Einstellen einer definierten Reibzahl; sie beeinflussen auch das Warmlöseverhalten. Sie können sowohl in der Basecoat-Zusammensetzung als auch erfindungsgemäß in der Topcoat-Zusammensetzung eingesetzt werden.

Das Warmlöse-Verhalten wird weiter verbessert, wenn einem erfindungsgemäßen Topcoat organische Partikel oder Pulver zugesetzt werden. Bevorzugt wird der Einsatz von pulverförmigen Polymeren wie z. B. Polyethylen-, Polypropylen- und Polyharnstoffpulver, aber auch Partikel aus Polyamid, Polyacrylat, Polymethacrylat, Polymethylmethacrylat oder anderen Kunststoff-Verbindungen, einzeln oder in Mischung. Die Größe bzw. der Durchmesser der Füllstoffpartikel wird in Anpassung an die vorgesehene Schichtstärke der antikorrosiven Beschichtung ausgewählt und beträgt bevorzugt bis 10 µm, bevorzugt 1 µm bis 6 µm. Pulverförmige organische Partikel werden im Topcoat in einer Menge von bis zu 20 Gewichts-%, bevorzugt in einer Menge von bis zu 15 Gewichts-%, vorteilhaft in einer Menge von bis zu 10 Gewichts-%, besonders bevorzugt in einer Menge von bis zu 5 Gewichts-% eingesetzt. Die Untergrenze des Einsatzes organischer Partikel ergibt sich mit wenigen Versuchen, die den Effekt der organischen Partikel auf das Warmlöse-Verhalten erfassen.

Der hier beschriebene Topcoat wird bevorzugt als wässrige Lösung eingesetzt. Der Topcoat kann jedoch, falls der Anwendungsfall es erfordert, Anteile organische Lösungsmittel enthalten, zum Beispiel Alkohole, Ketone, Ester, Ether, allgemein können aliphatische oder aromatische organische Verbindungen oder Monomere der verwendeten Bindemittel wie zum Beispiel Silan-, Melamin-, Acryl- oder Methacrylmonomere eingesetzt sein.

Der Festkörpergehalt der hier beschriebenen flüssigen Topcoat-Zusammensetzung kann in einem weiten Bereich eingestellt werden. Üblich sind Festkörper zwischen 20 % und 80 % bezogen auf die Gesamtzusammensetzung der Topcoat-Zusammensetzung. Bevorzugt wird ein Festkörper zwischen 40 % und 60 % der Gesamtzusammensetzung der flüssigen Topcoat-Zusammensetzung eingestellt. Bezogen auf den Trockenfilm, also auf die ausgehärtete, antikorrosive Beschichtung, werden bevorzugt 80 Gewichts-% Bindemittel und 20 Gewichts-% Schmiermittel sowie dunkel färbende und ggf. weitere Additive eingesetzt. Weiter bevorzugt weist der Trockenfilm 80 Gewichts-% organisches Bindemittel und 20 Gewichts-% anorganisches Bindemittel auf.

Der Basecoat wird als flüssige Beschichtungszusammensetzung aufgetragen und dann getrocknet und ggf. ausgehärtet, so dass auf dem Werkstück eine Beschichtung mit einer Trockenfilmdicke von bis zu 20 µm, vorzugsweise von 6 µm bis 10 µm entsteht. Der Topcoat wird als flüssige Beschichtungszusammensetzung aufgetragen und dann getrocknet und ggf. ausgehärtet, so dass ein Trockenfilm in einer Stärke von bis zu 20 µm, vorzugsweise von 6 bis 10 µm entsteht. Unter Trocknen wird im Zusammenhang mit dieser Erfindung das Entfernen von Flüssigkeit verstanden; unter Aushärten wird das chemische Vernetzen des Bindemittels verstanden.

Details der Erfindung werden nachfolgend an Beispielen näher erläutert.
Die in den Ausführungsbeispielen gemachten Angaben in Gewichts-% beziehen sich, soweit nicht anders angegeben, auf die Gesamt-Zusammensetzung des flüssigen Basecoats oder Topcoats.

Die angegebenen Substanzen werden mit 100% Feststoff eingesetzt, es sei denn, es ist ausdrücklich anders angegeben.

### Ausführungsbeispiel 1

Ausführungsbeispiel 1 zeigt einige lösungsmittelbasierte Basecoats. Zur Umsetzung der Erfindung sind aber auch aus wässrigen Zusammensetzungen erzeugte Basecoats geeignet. Das Bindemittel der lösungsmittelbasierten Basecoats ist wie folgt zusammengesetzt:

**Tabelle 1 Zusammensetzung der lösungsmittelhaltigen Basecoat-Zusammensetzung (Gewichts-%)**

| | Anteil am Gesamt-Bindemittel | | | | |
|---|---|---|---|---|---|
| Versuch Nr. | 1 | 2 | 3 | 4 | 5 |
| Komponente des Bindemittels | | | | | |
| Trimethoxvinylsilan | 9,8 | 9,8 | 9,8 | 9,8 | 9,8 |
| Titan-Ethylhexanolat (Tetra-2-ethylhexyltitan at) | 24,9 | 24,9 | 24,9 | 24,9 | 24,9 |
| N-Butyl Polytitanat (Titanat-tetrabutanolat, polymer) | 36,8 | 36,8 | 36,8 | 36,8 | 36,8 |
| Alkohol | 14,5 | 14,5 | 14,5 | 14,5 | 14,5 |
| Antiabsetzmittel | 11,4 | 11,4 | 11,4 | 11,4 | 11,4 |
| Netz- und Dispergieradditiv | 2,6 | 2,6 | 2,6 | 2,6 | 2,6 |
| Bindemittel Gesamt | 100,0 | 100,0 | 100,0 | 100,0 | 100,0 |
| Zinkflake | 40 | 40 | | | 50 |
| ZnAlMg-Legierungspartikel | | | 50 | 50 | |
| Kupfer-Chromit -Spinell | | 10 | | | |
| Mangan-Eisen-Spinell | | | | 5 | |
| Ruß | | | | | 5 |

| Farbe der Beschichtung | | | | | |
|---|---|---|---|---|---|
| S = Silbrig | S | D | M | D | D |
| D = Dunkel | | | | | |
| M = Metallisch (dunkel) | | | | | |
| Weissrost | ++ | + | ++ | 0 | - |
| Rotrost (h Salzsprühtest) | 2000 | 1500 | 2000 | 1000 | 450 |

Jeweils 100 g des vorstehend beschriebenen, lösungsmittelbasierten Bindemittels werden in den Versuchen 1,2 gemäß Tabelle 1 mit 40 g Zinkflake (90 %-ig in Alkohol, Stärke der Flakes < 3 µm, längste Abmessung bis zu 35 µm) versetzt und durch Rühren wird eine homogene Basecoat-Zusammensetzung hergestellt. Die Helligkeit des auf das Werkstück aufgetragenen, getrockneten und ausgehärteten Basecoats wird gemessen. Zur Herstellung einer dunklen Basecoat-Zusammensetzung werden gemäß Versuch 2 10 g Kupfer-Chromit-Spinell auf 100 g Bindemittel zu der vorstehend beschriebenen Basecoat-Zusammensetzung hinzugegeben, der 40 g Zinkflake enthält.

Alternativ werden 100 g eines vorstehend beschriebenen Lösungsmittel enthaltenden Bindemittels in den Versuchen 3, 4 gemäß Tabelle 1 mit 50 g Metallpartikeln, die aus einer Zink-Aluminium-Magnesium-Legierung (ZnAlMg-Legierung) bestehen, zu einer Basecoat-Zusammensetzung verrührt. Die ZnAlMg-Legierungspartikel sind jeweils aus 6% Aluminium und Magnesium und dem Rest Zink zusammengesetzt. Die ZnAlMg-Partikel weisen eine Größe von 4 µm auf und werden als Paste (90%-ig in Alkohol) eingesetzt. Jeweils ein Basecoat wird auf ein gereinigtes, entfettetes Stahlschraube aufgetragen und bei 200 °C für 30 Minuten ausgehärtet, so dass der Basecoat eine Trockenfilmstärke von 10 µm aufweist.

Für diesen auf das Stahlschraube aufgetragenen Basecoat wird die Helligkeit einmal ohne Zusatz von Spinell gemessen und einmal mit Zusatz von 5 g Mangan-Eisen-Spinell zu dem Basecoat, der ZnAlMg-Legierungspartikel enthält. Als Vergleichsversuch werden gemäß Versuch 5 in Tabelle 1 zu einer Zinkflakes enthaltenden Basecoat-Zusammensetzung 5 g Ruß zugegeben, so dass auf dem Werkstück ein dunkler bzw. schwarzer Basecoat entsteht.

Die Auswertung der Helligkeitswerte für die Versuche, die in den Ausführungsbeispielen 1 und 2 durchgeführt wurden, zeigt Tabelle 2.

**Tabelle 2 Farbraumwerte für mit einem Basecoat beschichtete Schrauben**

| **Versuch** | **Farbraum-Wert** |
|---|---|
| Versuch 1 | 75 |
| Versuch 2 | <25 |
| Versuch 3 | 65 |
| Versuch 4 | <20 |
| Versuch 5 | <25 |

Tabelle 2 zeigt das Ergebnis der Farbraum-Analyse, jeweils für die in Tabelle 1 durchgeführten Versuche. Die in Tabelle 2 gezeigten Ergebnisse wurden erhalten durch Messung von der Lumiszenz "L" mit einem Minolta Spectrophotometer CM - 3600 d. Es zeigt sich, dass der Zusatz von Spinell oder Ruß zu einer dunklen, vom Betrachter als Schwarz empfundenen Beschichtung führt.

### Ausführungsbeispiel 2

Auf mit einem Basecoat gemäß Ausführungsbeispiel 1, Versuch 3, beschichteten Werkstücke (Stahlschrauben) wird als weitere Beschichtung erfindungsgemäß eine flüssige Topcoat-Zusammensetzung aufgetragen, die die in Tabelle 3 gezeigte Zusammensetzung aufweist.

Die Topcoat-Zusammensetzung wird durch Verrühren der einzelnen Komponenten hergestellt und wird, ebenso wie der Basecoat, mittels eines Tauch-SchleuderVerfahrens auf das Stahlschraube aufgetragen und in gleicher Weise ausgehärtet. Die Trockenfilmstärke des Topcoats beträgt jeweils 10 µm, so dass auf das Stahlschraube insgesamt eine Beschichtung mit einer Trockenfilmstärke von 20 µm aufgetragen ist.

Die in Tabelle 3 erläuterte, erfindungsgemäße Topcoat-Zusammensetzung weist als Bindemittel ein Polyacrylat, ein Silan, ein Silikat, hier: Lithiumpolysilikat und Harnstoff-Formaldehyd auf. Es zeigt sich, dass der Anteil der verschiedenen Bestandteile des Bindemittels in weiten Bereichen frei gewählt werden kann, wobei Bindemittel-Zusammensetzungen, die mehr als 40 Gewichts-% organisches Bindemittel und mehr als 10 Gewichts-% anorganisches Bindemittel, jeweils bezogen auf den Gesamteinsatz an Bindemitteln aufweisen, besonders geeignet sind. Die anorganischen Bestandteile des Bindemittels können neben dem in Tabelle 3 aufgeführten Silan und Lithiumpolysilikat auch aus anderen anorganischen Bindemitteln gewählt werden, z. B. können Natrium- oder Kaliumsilikate bzw. -polysilikate, silanmodifizierte Silikate, Siloxane, aber auch Alkyl-funktionalisierte Silane eingesetzt werden. Gleiches gilt für die organischen Bindemittel, hier können z. B. epoxybasierte Bindemittel, Polyurethane, Polyamide, Acrylate, Methacrylate, vernetzende und nicht-vernetzende Polymere oder Monomere oder harnstoffbasierte Kunstharze wie z. B. Melamin eingesetzt werden, wobei ebenfalls gute Ergebnisse mit Blick auf den Korrosionsschutz und insbesondere das Warmlöseverhalten erreicht werden. Der Einsatz von stickstoffbasierten Kunstharzen beträgt bei den Ausführungsbeispielen gemäß Tabelle 3 maximal 25 Gewichts-% bezogen auf den Gesamteinsatz an organischem Bindemittel.

Beide Topcoat-Zusammensetzungen Nr. 1 und Nr. 2 weisen 2 Gewichts-% Ruß auf, so dass der auf dem Werkstück erzeugte Topcoat eine schwarze Färbung aufweist. Die Topcoat-Zusammensetzung weist in beiden Ausführungen, Nr. 1 und Nr. 2, weiterhin ein Additiv zur Einstellung der Reibzahl, hier: Polyethylen als Gleit- oder Schmiermittel auf. Das Gleit- oder Schmiermittel wird dem Topcoat zur Einstellung eines definierten Reibzahl-Bereichs zugesetzt.

**Tabelle 3 Schwarze, wässrige Topcoat-Zusammensetzungen mit Schmiermittel (Angaben in Gewichts-%)**

| **Bestandteil** | **schwarzer Topcoat Nr.1** | **schwarzer Topcoat Nr.2** |
|---|---|---|
| **Bindemittel** | | |
| Polyacrylat | 16,5 | 8 |
| Silan | 3 | 6 |
| Lithiumpolysilikat | 2,3 | 4,6 |
| Harnstoff-Formaldehyd | 4 | 2 |

| **Additive** | | |
|---|---|---|
| Polyethylen | 2 | 2 |
| Ruß | 2 | 2 |
| Wasser | 70,2 | 75,4 |
| Gesamt | 100 | 100 |
| Festkörper | 29,8 | 24,6 |
| Reibzahl akzeptabel | + | + |

Die Gesamtzahl der Werkstücke, die mit diesen Topcoat-Zusammensetzungen beschichtet sind, beträgt zwischen 0,10 und 0,12. Die Reibzahl wird bei Raumtemperatur am Kopf und am Gewinde der Schraube gemessen und als Gesamtreibzahl angegeben. Die Reibzahl bei Raumtemperatur einzustellen, ist weitgehend bekannt. Weitaus anspruchsvoller ist es, die Reibzahl auch für ein auf 150 °C erwärmtes Werkstück in einem vorgegebenen Bereich nicht allzu stark absinken zu lassen, da sich Beschichtungen, die zur Reibzahl-Einstellung verwendet werden, bei Erwärmung in ihren Gleit-bzw. Schmiereigenschaften oft stark ändern. Die Reibzahl der wie vorstehend beschrieben dunkel beschichteten Werkstücke kann auch nach der Wärmebehandlung bei 0,07 bis 0,09 gehalten werden. Damit zeigen die hier untersuchten, dunkel beschichteten Schrauben ein gutes Warmlöseverhalten, weil das Absinken der Reibzahl in erwärmtem Zustand verhindert werden kann.

**Tabelle 4 Schwarze Topcoat-Zusammensetzungen mit Schmiermittel (Angaben in Gewichts-%)**

| **Versuch Nr.** | **3** | **4** | **5** | **6** | **7** | **8** | **9** |
|---|---|---|---|---|---|---|---|
| Wasser (demin.) | 49,75 | 76,22 | 75,22 | 67,87 | 66,60 | 68,17 | 64,27 |

| **Additive** | | | | | | | |
|---|---|---|---|---|---|---|---|
| Verdicker | | 0,18 | 0,18 | 0,18 | 0,18 | 0,18 | 0,18 |
| Entschäumer | | | | | | | 5,60 |
| Verlaufmittel | 1,00 | 0,80 | | 0,80 | 0,80 | 0,80 | 0,80 |
| Ruß | 2,00 | 2,00 | 2,00 | 2,00 | 2,00 | 2,00 | 2,00 |

| **Schmiermittel** | | | | | | | |
|---|---|---|---|---|---|---|---|
| Polyethersiloxan-Copolymer | | 0,30 | 0,20 | 0,30 | 0,30 | 0,30 | 0,30 |
| Polytetrafluoroethylen | 5,40 | 3,60 | 2,40 | 3,60 | 3,60 | 3,60 | 3,60 |
| Polyethylen | 3,15 | 1,90 | 2,10 | 1,90 | 1,90 | 1,90 | 1,90 |

| **Bindemittel** | | | | | | | |
|---|---|---|---|---|---|---|---|
| Styrolacrylat | 15,00 | 15,00 | 7,50 | 10,75 | 19,00 | 10,75 | 10,75 |
| Oligomeres Siloxan | | | 2,00 | 6,60 | 3,52 | 6,60 | 6,60 |
| Natronwasserglas | | | | | | 5,70 | |
| Lithiumpolysilikat | | | 8,40 | 4,00 | 2,10 | | 4,00 |
| Polyurethanpolyol | | | | 2,00 | | | |
| Siliconharz-Emulsion | 25,70 | | | | | | |
| Summe | 100,00 | 100,00 | 100,00 | 100,00 | 100,00 | 100,00 | 100,00 |
| Reibzahlfenster akzeptabel | + | + | + | + | + | + | + |
| Warmlösen akzeptabel | + | - | + | + | + | + | + |

Tabellen 4 und 5 zeigen Alternativen für die flüssige Zusammensetzung von schwarzen Topcoats. Diese Topcoat-Zusammensetzungen 3 bis 15 der Tabellen 4, 5 wurden wie vorstehend beschrieben, jeweils auf den Basecoat gemäß Tabelle 1, Nr. 3 aufgebracht, getrocknet und ausgehärtet; allerdings hat sich gezeigt, dass vergleichbare Ergebnisse auch auf anderen Basecoat-Zusammensetzungen erhalten werden.

Versuch 4 (Tabelle 4) ist ein Referenzversuch, bei dem kein organisches Bindemittel eingesetzt wird. Mit diesem Topcoat kann zwar ein akzeptables Reibzahlfenster gemäß VDA 235-101 eingestellt werden. Allerdings erfüllt dieser Topcoat nicht die Anforderungen an das Warmlösen gemäß VDA 235-203. Versuch 3 in Tabelle 4 stellt ebenfalls kein erfindungsgemäßes Beispiel dar.

**Tabelle 5 Schwarze Topcoat-Zusammensetzungen mit Schmiermittel (Angaben in Gewichts-%)**

| **Versuch Nr.** | **10** | **11** | **12** | **13** | **14** | **15** |
|---|---|---|---|---|---|---|
| Wasser (demin.) | 66,32 | 66,82 | 66,82 | 71,32 | 66,28 | 71,48 |

| **Additive** | | | | | | |
|---|---|---|---|---|---|---|
| Verdicker | 0,18 | 0,18 | 0,18 | 0,18 | 0,32 | 0,32 |
| Verlaufmittel | 0,80 | 0,80 | 0,80 | 0,80 | 0,80 | 0,80 |
| Korrosionsinhibitor | | | 0,50 | | | |
| Ruß | 2,00 | 2,00 | 2,00 | 2,00 | 2,00 | 2,00 |

| **Schmiermittel** | | | | | | |
|---|---|---|---|---|---|---|
| Polyethersiloxan -Copolymer | 0,30 | 0,30 | 0,30 | 0,30 | 0,30 | 0,30 |
| Polytetrafluoroethylen | 3,60 | 2,40 | 2,40 | 3,60 | 3,60 | 3,60 |
| Polyethylen | 0,70 | 1,40 | 1,40 | 0,70 | 0,60 | 0,60 |

| **Bindemittel** | | | | | | |
|---|---|---|---|---|---|---|
| Styrolacrylat | 16,50 | 16,50 | 16,00 | 8,00 | 16,50 | 16,50 |
| Oligomeres Siloxan | 3,50 | 3,50 | 3,50 | 7,10 | 3,50 | |
| Natronwasserglas | | | | | | |
| Lithiumpolysilikat | 2,10 | 2,10 | 2,10 | 4,00 | 2,10 | |
| Methyliertes Melamin-Formaldehyd-Harz | 4,00 | 4,00 | 4,00 | 2,00 | 4,00 | 4,00 |
| Siliconharz- Emulsion | | | | | | |
| Summe | 100,00 | 100,00 | 100,00 | 100,00 | 100,00 | 100,00 |
| Reibzahl akzeptabel | + | + | + | + | + | + |
| Warmlösen akzeptabel | + | + | + | + | + | - |

Versuch 15 (Tabelle 5) ist ein weiterer Referenzversuch, bei dem organisches Bindemittel eingesetzt wird. Mit diesem Topcoat kann zwar auch ein akzeptables Reibzahlfenster eingestellt werden, doch können die Anforderungen an das Warmlösen gemäß der VDA-Vorschrift nicht erfüllt werden.

Mit den Topcoat-Zusammensetzungen der Tabellen 4, 5 werden jeweils unter Zusatz von 2% Ruß als Färbemittel dunkel bzw. schwarz gefärbte Topcoats hergestellt. Die mit dem vorgenannten Basecoat und einem der Topcoats nach den Versuchen 1-15 gemäß der Tabellen 3-5 beschichteten Stahlschrauben weisen eine schwarze Oberfläche auf; der Farbraum-Wert liegt unter 25.

Das Bindemittel weist neben einer organischen Komponente, hier Styrolacrylat allein oder in Mischung mit Polyurethanpolyol oder methyliertem Melamin-Formaldehyd-Harz, auch anorganische Komponenten auf. Als anorganisches Bindemittel werden eine Silikonharz-Emulsion, ein oligomeres Siloxan und ein Silikat, jeweils einzeln oder in Kombination eingesetzt. Unter den Silikaten wird bevorzugt Lithiumpolysilikat eingesetzt, andere Silikate wie z. B. Natriumsilikat (Natronwasserglas) sind aber auch geeignet. Das methylierte Melamin-Formaldehyd-Harz ist ein vernetzendes Bindemittel. Das vorliegend eingesetzte Styrolacrylat ist ein nicht-vernetzendes Bindemittel. Es kann aber ohne weiteres gegen noch vernetzendes Stryrolacrylat ausgetauscht werden.

Der Anteil des anorganischen Bindemittels am Gesamt-Bindemittel beträgt mindestens 22,8 Gewichts-% (Versuch 7) und maximal 63,1 Gewichts-% (Versuch 3). Der Anteil des organischen Bindemittels beträgt bevorzugt 40 Gewichts-% bis 50 Gewichts-% bezogen auf das Gesamt-Bindemittel, kann aber durchaus auch bis 80 Gewichts-% erreichen. Der Bindemittel-Anteil insgesamt beträgt bevorzugt zwischen 20 Gewichts-% und 30 Gewichts-% bezogen auf die wässrige Zusammensetzung insgesamt. Bevorzugt werden 20 Gewichts-% bis 25 Gewichts-% Bindemittel insgesamt eingesetzt. Der FeststoffAnteil beträgt bei den Versuchen gemäß Tabellen 3-5 zwischen ca. 25 Gewichts-% und ca. 50 Gewichts-%.

Als Additive werden neben üblichen und bekannten Verdickern, hier ein Schichtsilikat in Lösung, Entschäumern, hier ein kolloidales Siliciumdioxid, das auch als Korrosionsschutzpigment wirkt, und einem Verlaufsmittel, hier ein Polyethersiloxan-Copolymer sowie einem Korrosionsinhibitor, hier Aminophosphonsäuresalz als wesentliches Additiv zum Einstellen der Reibzahl auch Schmiermittel eingesetzt.

Als Schmiermittel werden für die vorliegenden Versuche gemäß Tabellen 4, 5 ein Polyethersiloxan-Copolymer, Polytetrafluorethylen sowie Polyethylen in Kombination eingesetzt. Es ist aber auch der Einsatz eines Schmiermittels allein geeignet, um sowohl eine akzeptable Reibzahl als auch ein akzeptables Warmlöseverhalten zu erreichen, siehe hierzu Tabelle 3, Versuche 1, 2. Schmiermittel können sowohl als Feststoff als auch in flüssiger Form eingesetzt werden. Sie werden in einer Menge von bis zu 10 Gewichts-% eingesetzt; der geringste Einsatz beträgt in den Versuchen 11, 124,1 Gewichts-% und die maximale Menge beträgt 8,55 Gewichts-% im Versuch 3.

Polyethylen, Polypropylen und Polyharnstoff werden ggf. einzeln oder in Mischung, mikronisiert und pulverförmig eingesetzt. Der Einsatz kann in Form einer Dispersion oder Suspension erfolgen. Die Teilchengröße orientiert sich dabei an den Anforderungen der Schichtdicke, mit der der Topcoat aufgetragen werden soll und beträgt in diesem Versuchen 3 µm.

Die Topcoat-Zusammensetzungen gemäß der Tabellen 3 bis 5 sind alkalische Zusammensetzungen, die meist einen pH-Wert von mindestens 10, bevorzugt von bis zu 12 aufweisen.

Die Topcoats, die nach den Rezepturen der Versuche 1-15 in Tabellen 3, 4 und 5 hergestellt wurden, wurden hinsichtlich der Reibzahl sowie des Warmlöse-Verhaltens untersucht. Der Topcoat gemäß Versuch 4 zeigt ein ungenügendes Warmlöse-Verhalten, der nach der VDA 235-203 zulässige Abfall der Reibzahl bis auf eine untere Grenze von 0,06 konnte mit einem Versuchsergebnis von ungefähr 0,045 nach Erwärmen der Schraubverbindung nicht gehalten werden. Dies ist darauf zurückzuführen, dass allein organisches Bindemittel verwendet wurde. Im Vergleich zu den Versuchen 3, 6 und 9 zeigt sich, dass der erfindungsgemäß erforderliche Anteil anorganischen Bindemittels eine Verbesserung des Warmlöseverhaltens um mehr als 30 % gewährleistet, so dass die Anforderung an das Warmlöse-Verhalten erreicht werden. In gleicher Weise erfüllt der Topcoat gemäß Versuch 15 nicht die Anforderungen an das Warmlösen; die nach der Wärmebehandlung gemessene Reibzahl beträgt 0,5. Die mit Ausnahme des Anteils von 5,6 Gewichts-% anorganischem Bindemittel gleiche Topcoat-Zusammensetzung des Versuchs 14 und auch die Ergebnisse von Versuch 10 zeigen nach dem Warmlösen eine Reibzahl von 0,7; die Anforderungen an das Warmlösen werden nach Zusatz eines anorganischen Bindemittels, hier z. B. eines Siloxans und eines Silikats erfüllt. Ausgehend von einer kalt gemessenen Reibzahl von 0,1 für die Versuche 10, 14 und 15 ist hier der stabilisierende Effekt anorganischer Bindemittel besonders deutlich.

Bei ansonsten vergleichbaren Beschichtungszusammensetzungen für einen Topcoat, der neben einem dunkel färbenden Additiv und einem Schmiermittel allein organisches Bindemittel aufweist, kann durch den erfindungsgemäßen Zusatz von anorganischem Bindemittel die Anforderung an das Warmlösen erfüllt werden, was mit einem rein organischen Bindemittel nicht möglich ist. Die Steigerung der Reibzahl nach dem Warmlösen beträgt meist mehr als 25%, in einigen Fällen wird die Reibzahl nach dem Warmlösen um bis zu 50% gesteigert, in Extremfällen kann eine Verbesserung um bis zu 70% erreicht werden.

Die Schrauben, die mit dem vorstehend beschriebenen Basecoat und mit einem Topcoat gemäß Versuch 5, 7 und 8 sowie 12, 13 beschichtet wurden, zeigen beim Warmlöse-Versuch einen besonders geringen Abfall in der Reibzahl. Diese Topcoat-Zusammensetzungen sind besonders gut geeignet, um ein metallisches Werkstück mit einer dunklen Oberfläche zu versehen, die sowohl ein gemäß VDA 235-101 vorgegebenes Reibzahl-Fenster von beispielsweise 0,10 bis 0,13 einhält als auch den Anforderungen an das Warmlöse-Verhalten genügt, die gemäß VDA 235-203 besagen, dass die ohne Erwärmung des Werkstücks gemessene Reibzahl nach einer Wärmebehandlung des Werkstücks nicht unter 0,06 insgesamt absinken darf. Die Schrauben, die mit Topcoat-Zusammensetzungen gemäß der Versuche 5, 7, 8, 12 und 13 beschichtet wurden, zeigen nach dem Warmlöse-Versuch Reibzahlwerte von mindestens 0,07. Die Schrauben der anderen Versuche 3, 6, 9 und 10, 11 und 14 zeigen nach dem Warmlösen Reibzahlwerte von 0,06 bis 0,07.

## Patentansprüche

1. Verfahren zum Herstellen einer dunklen Korrosionsschutzbeschichtung auf einem metallischen Substrat mit den Schritten:
- Aufbringen einer flüssigen Basecoat-Zusammensetzung aufweisend ein Bindemittel und Metallpartikel aus Zinklegierungen sowie
- Aufbringen einer flüssigen Topcoat-Zusammensetzung, aufweisend ein organisches Bindemittel und dunkel färbende Additive sowie ein Schmiermittel, auf den Basecoat,
**dadurch gekennzeichnet,**
**dass** eine flüssige Topcoat-Zusammensetzung eingesetzt wird, die eine Mischung aus einem organischen und einem anorganischen Bindemittel aufweist, wobei der Anteil des organischen Bindemittels in der Topcoat-Zusammensetzung mehr als 40 Gewichts-% und bis zu 90 Gewichts-%, bezogen auf das Bindemittel insgesamt, beträgt und wobei die dunkle Färbung des Topcoats eine Färbung der Korrosionsschutzbeschichtung auf einem metallischen Substrat erzeugt, die im Lab-Farbraum einen Wert von maximal 40, bestimmt gemäß EN ISO 11664-4, aufweist.

2. Verfahren nach mindestens einem der Ansprüche 1, **dadurch gekennzeichnet, dass** das organische Bindemittel der Topcoat-Zusammensetzung ausgewählt ist aus der Gruppe, die aufweist Acrylate, Methacrylate, Polyurethane, epoxidbasierte Bindemittel, stickstoffbasierte Bindemittel, Polyether, Polyester oder deren Mischungen.

3. Verfahren nach Anspruch 2, **dadurch gekennzeichnet, dass** Melamin als stickstoffbasiertes Bindemittel der Topcoat-Zusammensetzung eingesetzt wird.

4. Verfahren nach mindestens einem der Ansprüche 1 bis 3, **dadurch gekennzeichnet, dass** das anorganische Bindemittel der Topcoat-Zusammensetzung ausgewählt ist aus der Gruppe, die aufweist Silan, Silanol, Siloxan, Silikat, Titanverbindungen, Zirkoniumverbindungen, jeweils einzeln oder in Mischung.

5. Verfahren nach Anspruch 4, **dadurch gekennzeichnet, dass** als anorganisches Bindemittel der Topcoat-Zusammensetzung ein Silan, ein Silikat oder Polysilikat auf Basis von Natrium, Kalium, Lithium oder Ammonium oder ein kolloidales Silikat oder Polysilikat oder Mischungen oder Modifikationen dieser Silane und Silikate eingesetzt werden.

6. Verfahren nach mindestens einem der Ansprüche 1 bis 5, **dadurch gekennzeichnet, dass** vernetzende und/oder nicht-vernetzende Bindemittel eingesetzt werden.

7. Verfahren nach mindestens einem der vorangehenden Ansprüche 1 bis 6, **dadurch gekennzeichnet, dass** der Anteil des Bindemittels an der Gesamtzusammensetzung der Topcoat-Zusammensetzung mindestens 5 Gewichts-%, maximal bis zu 30 Gewichts-% beträgt.

8. Verfahren nach mindestens einem der vorangehenden Ansprüche, **dadurch gekennzeichnet, dass** der erfindungsgemäße Topcoat auf einen pH-Wert größer 7 eingestellt wird.

9. Verfahren nach Anspruch 1, **dadurch gekennzeichnet, dass** als Additiv zum Einstellen einer dunklen Färbung der Topcoat-Zusammensetzung Substanzen aus der Gruppe, eingesetzt werden, die Farbstoffe, Pigmente und Metalloxide umfasst, bevorzugt Ruß, Eisenoxidschwarz oder Spinell.

10. Verfahren nach Anspruch 1, **dadurch gekennzeichnet, dass** in der Topcoat-Zusammensetzung Schmiermittel eingesetzt werden aus der Gruppe, die Polyethylen, Polypropylen, Graphit, Polytetrafluorethylen (PTFE) und Molybdänsulfid umfasst.

11. Verfahren nach Anspruch 10, **dadurch gekennzeichnet, dass** Schmiermittel in der Topcoat-Zusammensetzung in einer Menge von bis zu 10 Gewichts-% eingesetzt werden.

12. Verfahren nach mindestens einem der vorangehenden Ansprüche 1 bis 11, **dadurch gekennzeichnet, dass** eine flüssige Topcoat-Zusammensetzung auf den Basecoat aufgetragen wird, wobei die Topcoat-Zusammensetzung einen pulverförmigen Füllstoff aufweist.

13. Verfahren nach Anspruch 12, **dadurch gekennzeichnet, dass** in der Topcoat-Zusammensetzung pulverförmiger Füllstoff aus der Gruppe eingesetzt wird, die Polyethylen, Polypropylen, Polyharnstoff, Polyamid, Polyacrylat, Polymethacrylat, Polymethylmethacrylat umfasst.

14. Verfahren nach Anspruch 12 oder 13, **dadurch gekennzeichnet, dass** eine Topcoat-Zusammensetzung auf den Basecoat aufgetragen wird, der bis zu 20 Gewichts-% pulverförmige organische Partikel enthält, bezogen auf die Gesamtzusammensetzung des Topcoats.

15. Verfahren nach mindestens einem der Ansprüche 1 bis 14, **dadurch gekennzeichnet, dass** in der Basecoat-Zusammensetzung Zink-Aluminium-Magnesiumlegierungspartikel als Metallpartikel eingesetzt werden.

16. Verfahren nach Anspruch 15, **dadurch gekennzeichnet, dass** die Metallpartikel, die in der Basecoat-Zusammensetzung eingesetzt werden, einen Gehalt an Aluminium von bis zu 20 Gewichts-% und einen Gehalt an Magnesium von bis zu 20 Gewichts-% aufweisen, jeweils bezogen auf das Gesamtgewicht der Legierung, und dass der Rest Zink aufweist.

17. Flüssige Topcoat-Zusammensetzung, aufweisend ein organisches Bindemittel, dunkel färbende Additive und ein Schmiermittel, **dadurch gekennzeichnet, dass** die flüssige Topcoat-Zusammensetzung ein anorganisches Bindemittel aufweist, wobei der Anteil des organischen Bindemittels mehr als 40 Gewichts-% und bis zu 90 Gewichts-%, bezogen auf das Gesamt-Bindemittel, beträgt und wobei die dunkle Färbung des Topcoats auf einem metallischen Substrat, das mit einem Basecoat, aufweisend ein Bindemittel und Metallpartikel aus Zinklegierungen, beschichtet ist, die Färbung einer Beschichtung erzeugt, die im Lab-Farbraum einen Wert von maximal 40, bestimmt gemäß EN ISO 11664-4, aufweist.

18. Flüssige Topcoat-Zusammensetzung nach Anspruch 17, **dadurch gekennzeichnet, dass** der Topcoat pulverförmige organische Partikel aufweist.

## Claims

1. A method for producing a dark anti-corrosive coating on a metallic substrate, comprising the steps of:
- Application of a liquid basecoat composition comprising a binder and metal particles of zinc alloys and
- Applying a liquid topcoat composition comprising an organic binder and dark colouring additives and a lubricant to the basecoat,
**characterised in that**
a liquid topcoat composition is used which comprises a mixture of an organic and an inorganic binder, wherein the proportion of the organic binder in the topcoat composition is more than 40% by weight and up to 90% by weight, based on the total binder, and wherein the dark colour of the topcoat produces a colouration of the anti-corrosion coating on a metallic substrate which has a maximum value of 40 in the LAB colour space as determined according to EN ISO 11664-4.

2. The method according to claim 1, **characterised in that** the organic binder of the topcoat composition is selected from the group comprising acrylates, methacrylates, polyurethanes, epoxy-based binders, nitrogen-based binders, polyethers, polyesters or mixtures thereof.

3. The method according to claim 2, **characterised in that** melamine is used as the nitrogen-based binder of the topcoat composition.

4. The method according to at least one of claims 1 through 3, **characterised in that** the inorganic binder of the topcoat composition is selected from the group comprising silane, silanol, siloxane, silicate, titanium compounds, zirconium compounds, each individually or in admixture.

5. The method according to claim 4, **characterised in that** the inorganic binder of the topcoat composition, a silane, a silicate or polysilicate based on sodium, potassium, lithium or ammonium or a colloidal silicate or polysilicate or mixtures or modifications of these silanes and silicates are used.

6. The method according to at least one of claims 1 through 5, **characterised in that** cross-linking and/or non-cross-linking binders are used.

7. The method according to at least one of the preceding claims 1 through 6, **characterised in that** the proportion of the binder in the total composition of the topcoat composition is at least 5% by weight, at most up to 30% by weight.

8. The method according to at least one of the preceding claims, **characterised in that** the topcoat according to the invention is adjusted to a pH greater than 7.

9. The method according to claim 1, **characterised in that** substances from the group comprising dyes, pigments and metal oxides, preferably carbon black, iron oxide black or spinel are used as an additive for adjusting a dark colouration of the topcoat composition.

10. The method according to claim 1, **characterised in that** lubricants from the group comprising polyethylene, polypropylene, graphite, polytetrafluoroethylene (PTFE) and molybdenum sulphide are used in the topcoat composition.

11. The method according to claim 10, **characterised in that** lubricants in an amount of up to 10% by weight are used in the topcoat composition.

12. The method according to at least one of the preceding claims 1 through 11, **characterised in that** a liquid topcoat composition is applied to the basecoat, wherein the topcoat composition comprises a powdery filler.

13. The method according to claim 12, **characterised in that** powdered filler from the group comprising polyethylene, polypropylene, polyurea, polyamide, polyacrylate, polymethacrylate, poly(methyl methacrylate) is used in the topcoat composition.

14. The method according to claim 12 or 13, **characterised in that** a topcoat composition containing up to 20% by weight of powdered organic particles, based on the total composition of the topcoat, is applied to the basecoat.

15. The method according to at least one of claims 1 through 14, **characterised in that** zinc-aluminium-magnesium alloy particles are used as metal particles in the basecoat composition.

16. The method according to claim 15, **characterised in that** the metal particles used in the basecoat composition have an aluminium content of up to 20% by weight and a magnesium content of up to 20% by weight, based in each case on the total weight of the alloy, and that the remainder is zinc.

17. A liquid topcoat composition comprising an organic binder, dark colouring additives and a lubricant, **characterised in that** the liquid topcoat composition comprises an inorganic binder, the content of the organic binder being more than 40% by weight and up to 90% by weight, based on the total binder, and wherein the dark colouration of the topcoat on a metallic substrate, which is coated with a basecoat comprising a binder and metal particles from zinc alloys, produces the colouration of a coating having a value in the LAB colour space of a maximum of 40, as determined in accordance with EN ISO 11664-4.

18. The liquid topcoat composition according to claim 17, **characterised in that** the topcoat comprises powdered organic particles.

## Revendications

1. Procédé de fabrication d'un revêtement de protection anticorrosion foncé sur un substrat métallique, comprenant les étapes consistant à :
- appliquer une composition de couche de base liquide comprenant un liant et des particules métalliques d'alliages de zinc et
- appliquer une composition de couche de finition liquide comprenant un liant organique et des additifs colorants foncés et un lubrifiant sur la couche de base,
**caractérisé en ce**
**qu'**on utilise une composition de couche de finition liquide qui comprend un mélange d'un liant organique et d'un liant inorganique, la proportion du liant organique dans la composition de la couche de finition étant supérieure à 40 % en poids et allant jusqu'à 90 % en poids, par rapport au liant au total et dans lequel la couleur foncée de la couche de finition produit une coloration du revêtement de protection anti-corrosion sur un substrat métallique qui a une valeur maximale de 40 dans l'espace colorimétrique de laboratoire, déterminé conformément à la norme EN ISO 11664-4.

2. Procédé selon la revendication 1, **caractérisé en ce que** le liant organique de la composition de couche de finition est choisi dans le groupe comprenant les acrylates, les méthacrylates, les polyuréthanes, les liants à base d'époxy, les liants à base d'azote, les polyéthers, les polyesters ou leurs mélanges.

3. Procédé selon la revendication 2, **caractérisé en ce que** la mélamine est utilisée en tant que liant à base d'azote de la composition de couche de finition.

4. Procédé selon l'une quelconque des revendications 1 à 3, **caractérisé en ce que** le liant inorganique de la composition de couche de finition est choisi dans le groupe comprenant le silane, le silanol, le siloxane, le silicate, les composés de titane, les composés de zirconium, chacun individuellement ou en mélange.

5. Procédé selon la revendication 4, **caractérisé en ce qu'**un silane, un silicate ou un polysilicate à base de sodium, de potassium, de lithium ou d'ammonium ou un silicate colloïdal ou un polysilicate ou des mélanges ou des modifications de ces silanes et silicates est utilisé comme liant inorganique de la composition de couche de finition.

6. Procédé selon au moins une des revendications 1 à 5, **caractérisé en ce que** l'on utilise des liants réticulants et/ou non réticulants.

7. Procédé selon au moins une des revendications 1 à 6 précédentes, **caractérisé en ce que** la proportion du liant dans la composition totale de la composition de couche de finition est d'au moins 5 % en poids, jusqu'à 30 % en poids maximum.

8. Procédé selon au moins une des revendications précédentes, **caractérisé en ce que** la couche de finition selon l'invention est ajustée à un pH supérieur à 7.

9. Procédé selon la revendication 1, **caractérisé en ce que** sont utilisés en tant qu'additif pour ajuster une coloration foncée de la composition de couche de finition des substances du groupe comprenant les colorants, les pigments et les oxydes métalliques, de préférence le noir de carbone, le noir d'oxyde de fer ou le spinelle.

10. Procédé selon la revendication 1, **caractérisé en ce que** sont utilisés dans la composition de couche de finition des lubrifiants du groupe comprenant le polyéthylène, le polypropylène, le graphite, le polytétrafluoroéthylène (PTFE) et le sulfure de molybdène.

11. Procédé selon la revendication 10, **caractérisé en ce que** des lubrifiants sont utilisés dans la composition de couche de finition en une quantité allant jusqu'à 10 % en poids.

12. Procédé selon au moins une des revendications précédentes 1 à 11, **caractérisé en ce qu'**une composition de couche de finition liquide est appliquée sur la couche de base, la composition de couche de finition comprenant une charge pulvérulente.

13. Procédé selon la revendication 12, **caractérisé en ce que** dans la composition de couche de finition, on utilise une charge pulvérulente du groupe comprenant le polyéthylène, le polypropylène, la polyurée, le polyamide, le polyacrylate, le polyméthacrylate, le polyméthylméthacrylate.

14. Procédé selon la revendication 12 ou 13, **caractérisé en ce qu'**une composition de couche de finition est appliquée sur la couche de base contenant jusqu'à 20 % en poids de particules organiques en poudre, sur la base de la composition totale de la couche de finition.

15. Procédé selon au moins une des revendications 1 à 14, **caractérisé en ce que** des particules d'alliage zinc-aluminium-magnésium sont utilisées comme particules métalliques dans la composition de couche de base.

16. Procédé selon la revendication 15, **caractérisé en ce que** les particules métalliques utilisées dans la composition de couche de base ont une teneur en aluminium allant jusqu'à 20 % en poids et une teneur en magnésium allant jusqu'à 20 % en poids, respectivement sur la base de poids total de l'alliage et que le reste présente du zinc.

17. Composition de couche de finition liquide comprenant un liant organique, des additifs colorants foncés et un lubrifiant, **caractérisée en ce que** la composition de couche de finition liquide comprend un liant inorganique, la teneur en liant organique étant supérieure à 40 % en poids et allant jusqu'à 90 % en poids, sur la base du liant total et dans laquelle la coloration foncée de la couche de finition sur un substrat métallique revêtu d'une couche de base comprenant un liant et des particules métalliques d'alliage de zinc produit la coloration d'un revêtement ayant une valeur dans l'espace colorimétrique de laboratoire maximale de 40, déterminée conformément à la norme EN ISO 11664-4.

18. Composition de couche de finition liquide selon la revendication 17, **caractérisée en ce que** la couche de finition comprend des particules organiques pulvérulentes.
